# EUROPEAN PATENT SPECIFICATION

(11) **EP 3 241 267 B1**
(45) Date of publication and mention of the grant of the patent: **27.10.2021**
(21) Application number: 16747072.3
(22) Date of filing: 02.02.2016
(51) Int. Cl.: H02K 1/14

(54) **MOTOR HAVING NON-CIRCULAR STATOR**
MOTOR MIT NICHT KREISFÖRMIGEM STATOR
MOTEUR AYANT UN STATOR NON CIRCULAIRE

(30) Priority: 02.02.2015 US 201562110752 P
(43) Date of publication of application: 08.11.2017
(60) Divisional application: 21197558.6
(73) Proprietor: Persimmon Technologies Corporation, Wakefield, MA 01880 (US)
(72) Inventor: KRISHNASAMY, Jayaraman, Boxborough, MA 01719 (US); HOSEK, Martin, Lowell, MA 01854 (US); POOLE, Dennis, East Derry, NH 03038 (US)
(74) Representative: Swindell & Pearson Limited
(86) International application number: PCT/US2016/016055
(87) International publication number: WO 2016/126633

(56) References cited:
- WO-A1-00/62400
- WO-A1-00/62400
- DE-A1- 1 563 066
- DE-A1-102011 018 294
- FR-A1- 2 899 396
- GB-A- 986 789
- GB-A- 2 257 844
- JP-A- 2003 158 834
- JP-A- 2005 080 432
- JP-A- 2008 131 809
- US-A- 2 496 831
- US-A1- 2008 061 653
- US-A1- 2012 176 074
- US-A1- 2012 176 074
- US-A1- 2014 134 016
- US-A1- 2014 305 246
- US-A1- 2014 346 904
- US-B2- 7 525 231

## Description

### BACKGROUND

### Technical Field

The exemplary and non-limiting embodiments relate generally to electric motors and, more particularly, to a motor having a generally oval-shaped stator.

### Brief Description of Prior Developments

Electric motors are generally used to provide translational or rotational motion to the various moving elements of automated mechanical devices. The electric motors used typically comprise rotating elements (rotors) assembled with stationary elements (stators). Magnets are located between the rotating and stationary elements or directly on the rotating element. Coils are wound around soft iron cores on the stationary elements and are located proximate the magnets.

In operating an electric motor, an electric current is passed through the coils, and a magnetic field is generated, which acts upon the magnets. When the magnetic field acts upon the magnets, one side of the rotating element is pushed and an opposing side of the rotating element is pulled, which thereby causes the rotating element to rotate relative to the stationary element. Efficiency of the rotation is based at least in part on the shape of the magnetic components used and the characteristics of the materials used in the fabrication of the electric motor.

### SUMMARY

The present invention is as set out in the apparatus according to independent claim 1 and the method according to independent claim 13. Optional features are covered by the dependent claims.

WO 00/62400 discloses a brushless synchronous electric motor comprising a stator which has, viewed in cross-section, along a right-angled cross-sectional plane with respect to the rotor axis, a substantially rectangular shape. The stator has internally a plurality of slots which house a stator electric winding. The slots extend lengthwise in a direction parallel to the axis of the rotor and are distributed circumferentially around the rotor within two arcs of a circumference, each having an amplitude equal to about a whole fraction of the flat angle and being situated on diametrically opposite sides with respect to the rotor axis. The motor is able to achieve a relatively high peak torque in relation to its dimensions.

US 7,525,231 discloses a stator for a recording disk driving motor, wherein the wire winding height of the first teeth over which the head portion moves is lower than the wire winding height of the second teeth over which is out of the moving range of the head portion. The first wire winding portion is formed so as to be radially longer than the second wire winding portion. With the configuration mentioned above, the number of winding of the wire around the first teeth is maintained without reducing the torque and varying the uniformity of the magnetic force in the circumferential direction which the stator generates.

US 2,496,831 discloses a four-polar electric apparatus of low power (up to about 20 watts) comprising a stator, whose magnetic circuit is built up from identical iron sheets which are each integral with their poles of invariable section on which are arranged coils of, say, identical copper section, a rotor being adapted to rotate between said poles.

US2012/176074 A1 discloses a system for decoupling a rotor from a stator of a permanent magnet motor and a flywheel storage system using the same. The flywheel storage system uses the permanent magnet motor as a magnetic active coupler to minimize magnetic losses in flywheel energy storage system during the motor-generator electric power transfer for enabling a magnetic field weakening method and a way of cancelling the losses during a conservative mode where the stator is totally decoupled from the rotor. The system enables the optimal sizing of a permanent motor-generator to be able to supply a constant power over a large range of rotating speeds.

FR2899396 discloses a motor that has a stator excited by electric coils, and a rotor with N pairs of poles that are magnetized radially in alternate directions. The stator has wide teeth and narrow teeth extending radially from an annular ring, and wide poles and narrow poles. The wide teeth carry coil windings and have width double the width of the narrow tooth. The narrow poles comprise a groove whose width is larger than the width of the narrow teeth.

US2014/346904 discloses a switched reluctance motor comprising: a rotor having a shaft disposed at a central portion thereof and having salient poles formed at an outer circumference thereof; a stator having the rotor rotatably installed therein while forming a gap and having salient poles facing the salient poles of the rotor; and an extraction pressure decreasing unit separating the rotor and the stator from a mold, wherein the rotor and the stator are made of a soft magnet composite.

JP2008131809 discloses a split core for a motor in which magnetic flux flows easily from a teeth to a yoke. The split core comprises a columnar tees, and a yoke provided over the entire circumference of the teeth while projecting. Assuming the angle made by the coil end face of the teeth and the end intersection face continuous to the coil end face of the teeth in the yoke is a core side angle the core side angle is an obtuse angle. Since the core side angle is an obtuse angle, magnetic flux flows easily from the teeth to the yoke in the split core, and the entire region of the coil side face of the yoke can be utilized effectively.

JP2005080432 discloses a motor that seeks to reduce copper losses, reduce oscillations/noises, and improve motor efficiency, and which has a higher freedom degree of a shape; and a method for manufacturing the motor by which the productivity can be improved and the working costs can be reduced. At least a part of the stator core of the motor is composed by molding by injecting a mixed material of a soft magnetic powder material and a resin into a die. When the axial length at the tip of the teeth of the stator core is set as A, the axial length at the teeth as B, and the axial length at a core back as C, it is set to A >=C>B. The shape of the teeth of the stator core is made into a nearly longer elliptical shape in the rotating axis direction. The injection molding is executed with the mixed material of the soft magnetic powder material and the resin by applying an oriented
magnetic field. A large amount of the soft magnetic powder material is filled into a magnetic path.

US2014/305246 A1 discloses a rotary motor including a rotor and at least one stator. The rotor has a shaft. The stator has an iron core and a coil wound around the iron core. A cross section of the iron core perpendicular to the shaft has a long axis and a short axis, and the rotor is disposed on an extension line of the long axis.

JP2003158834(A) discloses a motor comprising an almost cylindrical rotor, a stator integrally formed with a core back part connecting a plurality of teeth parts, the teeth parts provided to protrude to a rotor side while holding a prescribed space with an external peripheral surface of the rotor, and a coil arranged in the teeth parts divides the stator into two parts in the diametral direction of the rotor, to constitute the motor characterized by making the coil to a seta wire aligned to be wound to a cylindrical bobbin, forming the stator by stacking metal plate-like members of two kinds of mutually different shapes in the axial direction of the rotor, and fitting the bobbin to the teeth parts, thereafter moving the plate- like members each other in a axially vertical plane of the rotor.

### BRIEF DESCRIPTION OF THE DRAWINGS

The foregoing aspects and other features are explained in the following description, taken in connection with the accompanying drawings, wherein examples of a motor assembly useful understanding the invention do not belong to the invention, while embodiments do belong to the invention. In the drawings:
Figure 1A is an isometric representation of one example of a motor assembly useful for understanding the invention;
Figure 1B is an isometric representation of a stator of the motor assembly of Figure 1A;
Figure 1C is an isometric representation of a stator core of the motor assembly of Figure 1A;
Figure 1D is a section representation of a stator of the motor assembly of Figure 1A;
Figure 2A is an isometric representation of one example of a motor assembly useful for understanding the invention;
Figure 2B is an isometric representation of a stator of the motor assembly of Figure 2A;
Figure 2C is an isometric representation of a stator core of the motor assembly of Figure 2A;
Figure 2D is a section representation of a stator and rotor of the motor assembly of Figure 2A;
Figure 3A is an isometric representation of one example of a motor assembly useful for understanding the invention;
Figure 3B is an isometric representation of a stator of the motor assembly of Figure 3A;
Figure 3C is an isometric representation of a stator core of the motor assembly of Figure 3A;
Figure 3D is a section representation of a stator and rotor of the motor assembly of Figure 3A;
Figure 4 is a top representation of one example of a motor assembly useful for understanding the invention;
Figure 5 is a top representation of one example of a motor assembly useful for understanding the invention;
Figure 6 is a top representation of one embodiment belonging to the invention of a motor assembly;
Figure 7 is a top representation of one example of a motor assembly useful for understanding the invention;
Figure 8A is an isometric section representation of one example of a motor assembly useful for understanding the invention;
Figure 8B is an isometric section representation of a stator core of the motor assembly of Figure 8A;
Figure 8C is an isometric section representation of a rotor portion of the motor assembly of Figure 8A;
Figure 9A is an isometric section representation of one example of a motor assembly useful for understanding the invention.
Figure 9B is an isometric representation of a stator core of the motor assembly of Figure 9A;
Figure 9C is a section representation of the motor assembly of Figure 9A;
Figure 9D is an isometric section representation of a stator core of the motor assembly of Figure 9A;
Figure 9E is a partial isometric section representation of a stator core of the motor assembly of Figure 9A;
Figure 10 is an isometric representation of a robot drive;
Figure 11 is an isometric representation of a robot drive;
Figure 12 is a bottom representation of a robot drive;
Figure 13 is a side representation of a robot drive;
Figure 14 is an isometric representation of a robot drive;
Figure 15 is a side representation of a robot drive;
Figure 16 is an exploded isometric representation of a robot drive;
Figure 17 is an exploded isometric representation of a robot drive; and
Figure 18 is an exploded isometric representation of a robot drive.

### DETAILED DESCRIPTION OF EMBODIMENTS

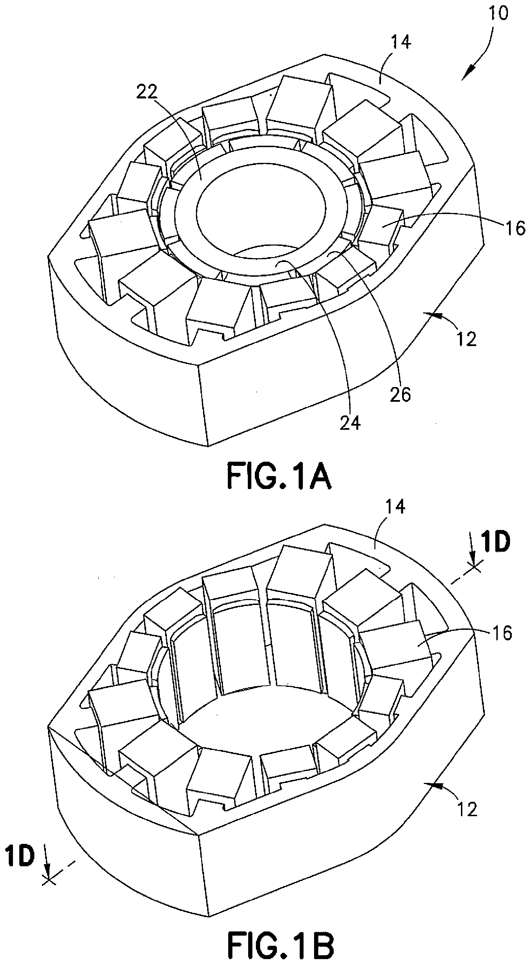

Referring to Fig. 1A, there is shown an isometric representation motor assembly 10 incorporating features of an example useful for understanding the invention.

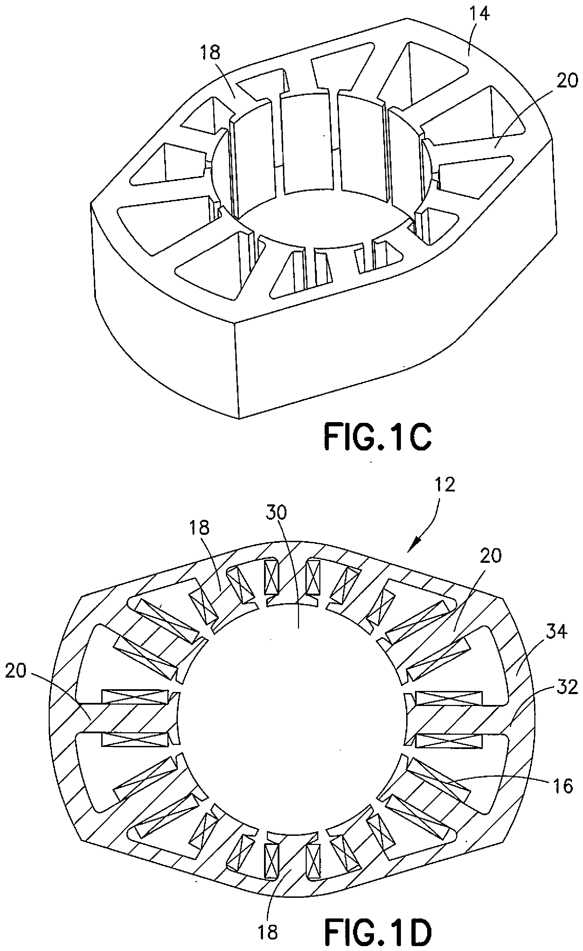

Referring also to Figure 1B, there is shown an isometric representation of stator 12 of motor assembly 10 of Figure 1A. Referring also to Figure 1C, there is shown an isometric representation of stator core 14 of motor assembly 10 of Figure 1A. Referring also to Figure 1D, there is shown a section representation of stator 12 of motor assembly 10 of Figure 1A. Although the features will be described with reference to the examples shown in the drawings, it should be understood that features can be embodied in many alternate forms of examples. In addition, any suitable size, shape, or type of elements or materials could be used. For example, as shown, the motor 10 is of a radial flux design. In alternate examples, the motor may be of an axial flux design or a hybrid 3-dimensional flux design. The features of the examples disclosed herein may similarly be applied to any motor, system, or component incorporating a core comprising a soft magnetic material.

Motor 10 and the subcomponents within motor 10 may have features as disclosed in the following references: U.S. Patent Application Serial No. 14/501,603, entitled "Structures Utilizing a Structured Magnetic Material and Methods for Making" filed September 30, 2014; U.S. Patent Application Serial No. 14/501,668, entitled "Structures Utilizing a Structured Magnetic Material and Methods for Making" filed September 30, 2014; U.S. Patent Publication No. 2014/0009025 A1, entitled "Hybrid Field Electric Motor" published January 9, 2014; U.S. Patent Publication No. 2013/0000861 A1, entitled "System and Method for Making Structured Magnetic Material from Insulated Particles" published January 3, 2013; U.S. Patent Publication No. 2013/0004359 A1, entitled "System and Method for Making a Structured Material" published January 3, 2013; U.S. Patent Publication No. 2013/0002085 A1, entitled "Structured Magnetic Material" published January 3, 2013; U.S. Patent Publication No. 2014/0103752 A1, entitled "Hybrid Motor" published April 17, 2014; U.S. Patent Publication No. 2013/0292081 A1, entitled "System and Method for Making a Structured Magnetic Material with Integrated Particle Insulation" published November 7, 2013; U.S. Patent Publication No. 2013/0000860 A1, entitled "System and Method for Making a Structured Magnetic Material via Layered Particle Deposition" published January 3, 2013; and U.S. Patent Publication No. 2013/0000447 A1, entitled "System and Method for Making a Structured Magnetic Material with Integrated Particle Insulation" published January 3, 2013.

In Figure 1A, motor 10 is shown with a substantially oval shaped stator 12 having stator core 14 and windings 16. In the examples shown in Figures 1A - 1D, a stator 12 is shown with core 14 that has short 18 and long 20 stator teeth. In alternate aspects, teeth 18, 20 may be the same length or more different lengths. The long teeth 20 may have more winding turns than the short teeth, for example, for more torque output for a given current. Alternately, the long teeth 20 may have the same number of turns as the short teeth, but use thicker wire to reduce overall phase resistance. Alternately, a thicker wire may be used on all of the teeth (long and short) and the overall number of winding turns may be maintained the same as a conventional circular motor or higher. For example, in a 3-phase motor, each phase winding may occupy equal numbers of short and long teeth respectively. Alternately, the number of stator teeth is not restricted to 12. In the example shown, rotor 22 is shown cylindrical and having rotor core 24 and rotor magnets 26. Alternately, the rotor may have any suitable shape. Figure 1A shows a rotor 22 stator 12 combination that makes up motor 10 where motor 10 is shown as a frameless motor. In alternate aspects, a frame may house rotor 22 and stator 12 with suitable bearings for rotor 22 and an output member coupled to rotor 22. In the example shown, two lengths of stator teeth are shown. In alternate aspects more or less different length teeth may be provided with more or less different windings corresponding to the different teeth. In the example, an apparatus is shown as motor 10 having rotor 22 and stator 12 where rotor 22 is located at least partially in rotor receiving area 30 of the stator 12. Stator 12 comprises at least one coil winding 16 and teeth 18, 20. The at least one coil winding 16 is located on at least some of the teeth 18, 20, where the teeth comprise a first set of the teeth 20 and a second set of the teeth 18. The teeth of the first set of teeth 20 are longer in a radial direction from the rotor receiving area 30 than the teeth of the second set of teeth 18. Here, the stator may comprise a stator member forming the teeth. Base 32 of each of the teeth may be located at a portion of the stator member which forms an outer perimeter wall 34 of the stator member. The outer perimeter wall 34 may have a shape as one of a substantial oval shape, a substantial triangle shape, a substantial square shape, a substantial rectangle shape or a substantial polygon shape. In alternate aspects, any suitable shape may be provided. In alternate aspects, the at least one coil winding 16 may be located on the first and second sets of teeth. The at least one coil winding 16 may comprise more winding turns on the first set of teeth than the second set of teeth and/or where the at least one coil winding 16 may comprise thicker wire on the first set of teeth 20 than the second set of teeth 18.

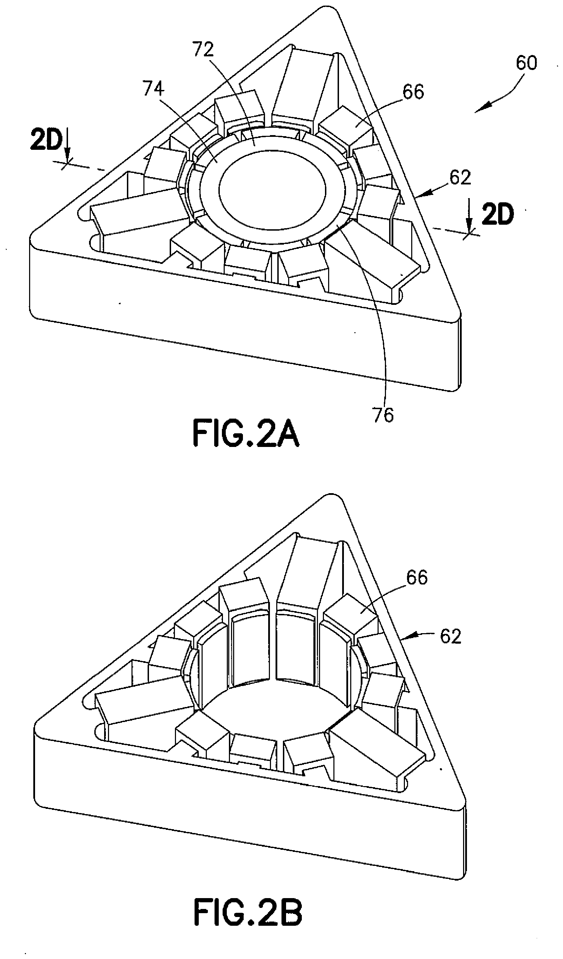

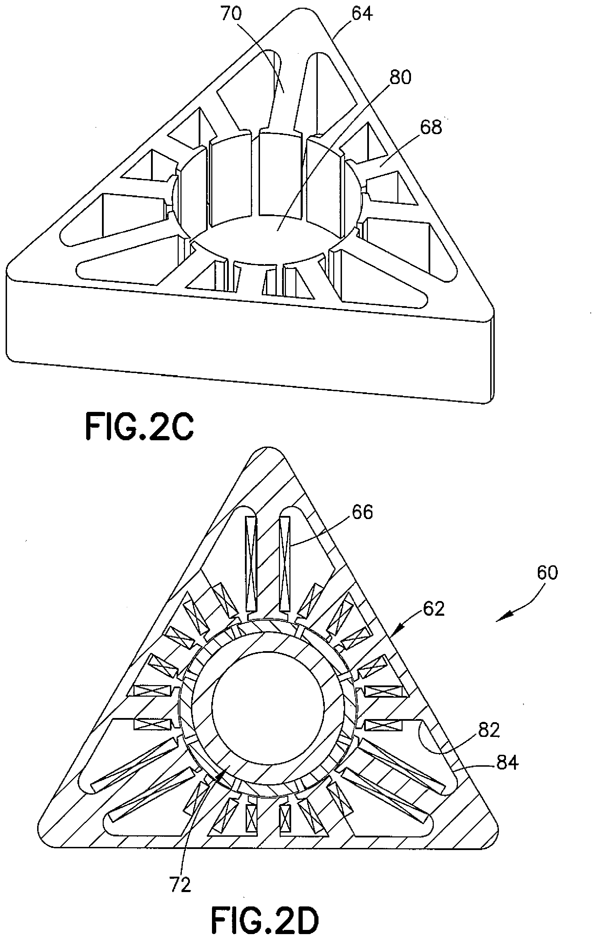

Referring now to Figure 2A, there is shown an isometric representation of an example motor assembly 60, useful for understanding the invention, with a triangular shaped stator 62. Referring also to Figure 2B, there is shown an isometric representation of stator 62 of motor assembly 60 of Figure 2A. Referring also to Figure 2C, there is shown an isometric representation of stator core 64 of motor assembly 60 of Figure 2A. Referring also to Figure 2D, there is shown a section representation of stator 62 of motor assembly 60 of Figure 2A. In Figure 2A, motor 60 is shown where stator 62 is triangular in shape having stator core 64 and windings 66. In the example shown in Figures 2A - 2D, a stator 62 is shown with core 64 that has short 68 and long 70 stator teeth. In alternate aspects, teeth 68, 70 may be the same length or more different lengths. The long teeth 70 may have more winding turns than the short teeth, for example, for more torque output for a given current. Alternately, the long teeth 70 may have the same number of turns as the short teeth, but use thicker wire to reduce overall phase resistance. Alternately, a thicker wire may be used on all of the teeth (long and short) and the overall number of winding turns may be maintained the same as a conventional circular motor or higher. For example, in a 3-phase motor, each phase winding may occupy equal numbers of short and long teeth respectively. Alternately, the number of stator teeth is not restricted to 12. In the example shown, rotor 72 is shown cylindrical and having rotor core 74 and rotor magnets 76. Alternately, the rotor may have any suitable shape. Figure 2A shows a rotor 72 stator 62 combination that makes up motor 60 where motor 60 is shown as a frameless motor. In alternate aspects, a frame may house rotor 72 and stator 62 with suitable bearings for rotor 72 and an output member coupled to rotor 72. In the example shown, multiple lengths of stator teeth are shown. In alternate aspects more or less different length teeth may be provided with more or less different windings corresponding to the different teeth. In the example, an apparatus is shown as motor 60 having rotor 72 and stator 62 where rotor 72 is located at least partially in rotor receiving area 80 of the stator 62. Stator 62 comprises at least one coil winding 66 and teeth 68, 70. The at least one coil winding 66 is located on at least some of the teeth 68, 70, where the teeth comprise a first set of the teeth 70 and a second set of the teeth 68. The teeth of the first set of teeth 70 are longer in a radial direction from the rotor receiving area 80 than the teeth of the second set of teeth 68. Here, the stator may comprise a stator member forming the teeth. Base 82 of each of the teeth may be located at a portion of the stator member which forms an outer perimeter wall 84 of the stator member. The outer perimeter wall 84 may have a shape as one of a substantial oval shape, a substantial triangle shape, a substantial square shape, a substantial rectangle shape or a substantial polygon shape. In alternate aspects, any suitable shape may be provided. In alternate aspects, the at least one coil winding 66 may be located on the first 70 and second 68 sets of teeth. The at least one coil winding 66 may comprise more winding turns on the first set of teeth than the second set of teeth and/or where the at least one coil winding 66 may comprise thicker wire on the first set of teeth than the second set of teeth.

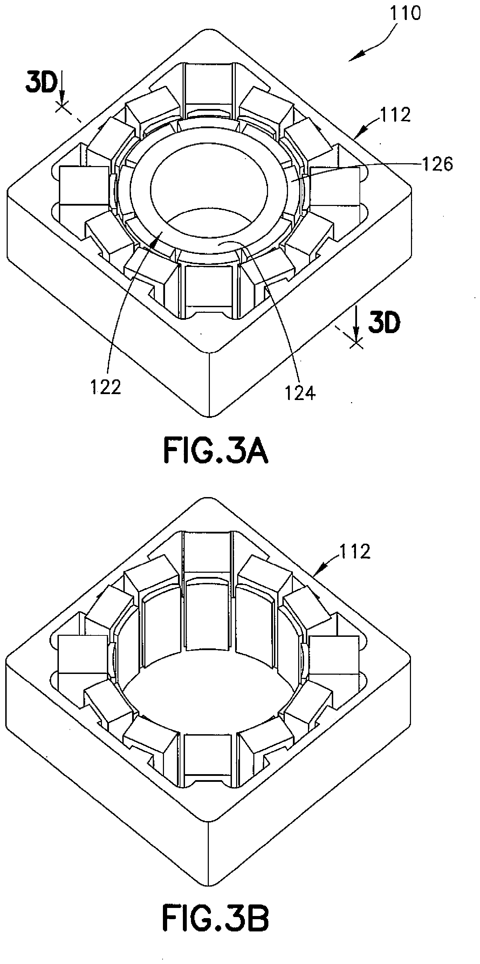

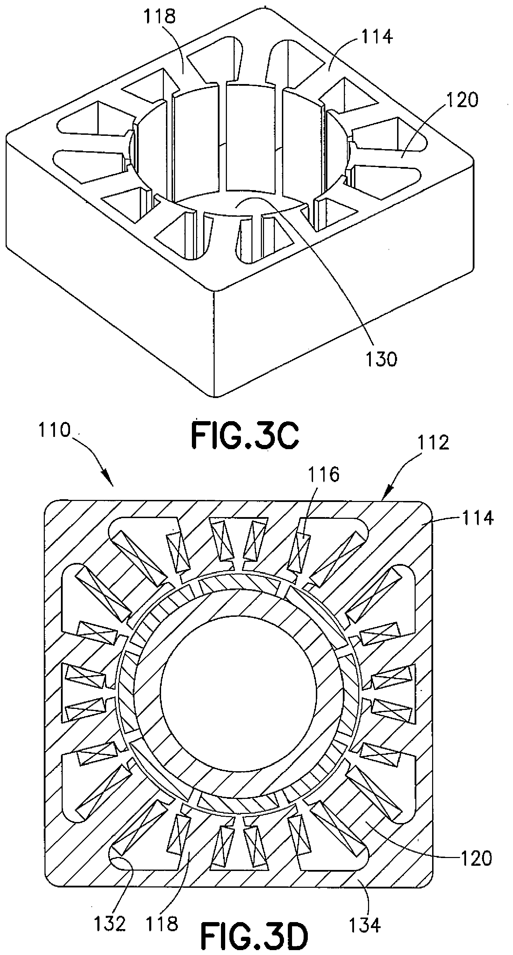

In Figure 3A, an example motor 110, useful for understanding the invention, is shown with a substantially square shaped stator 112 having stator core 114 and windings 116. In the example shown in Figures 3A - 3D, a stator 112 is shown with core 114 that has short 118 and long 120 stator teeth. In alternate aspects, teeth 118, 120 may be the same length or more different lengths. The long teeth 120 may have more winding turns than the short teeth 118, for example, for more torque output for a given current. Alternately, the long teeth 120 may have the same number of turns as the short teeth 118, but use thicker wire to reduce overall phase resistance. Alternately, a thicker wire may be used on all of the teeth (long and short) and the overall number of winding turns may be maintained the same as a conventional circular motor or higher. For example, in a 3-phase motor, each phase winding may occupy equal numbers of short and long teeth respectively. Alternately, the number of stator teeth is not restricted to 12. In the example shown, rotor 122 is shown cylindrical and having rotor core 124 and rotor magnets 126. Alternately, the rotor may have any suitable shape. Figure 3A shows a rotor 122 stator 112 combination that makes up motor 110 where motor 110 is shown as a frameless motor. In alternate aspects, a frame may house rotor 122 and stator 112 with suitable bearings for rotor 122 and an output member coupled to rotor 122. In the example shown, two lengths of stator teeth are shown. In alternate aspects more or less different length teeth may be provided with more or less different windings corresponding to the different teeth. In the example, an apparatus is shown as motor 110 having rotor 122 and stator 112 where rotor 122 is located at least partially in rotor receiving area 130 of the stator 112. Stator 112 comprises at least one coil winding 116 and teeth 118, 120. The at least one coil winding 116 is located on at least some of the teeth 118, 120, where the teeth comprise a first set of the teeth 120 and a second set of the teeth 118. The teeth of the first set of teeth 120 are longer in a radial direction from the rotor receiving area 130 than the teeth of the second set of teeth 118. Here, the stator may comprise a stator member forming the teeth. Base 132 of each of the teeth may be located at a portion of the stator member which forms an outer perimeter wall 134 of the stator member. The outer perimeter wall 134 may have a shape as one of a substantial oval shape, a substantial triangle shape, a substantial square shape, a substantial rectangle shape or a substantial polygon shape. In alternate aspects, any suitable shape may be provided. In alternate aspects, the at least one coil winding 116 may be located on the first 118 and second 120 sets of teeth. The at least one coil winding 116 may comprise more winding turns on the first set of teeth 118 than the second set of teeth 120 and/or where the at least one coil winding 116 may comprise thicker wire on the first set of teeth 118 than the second set of teeth 120.

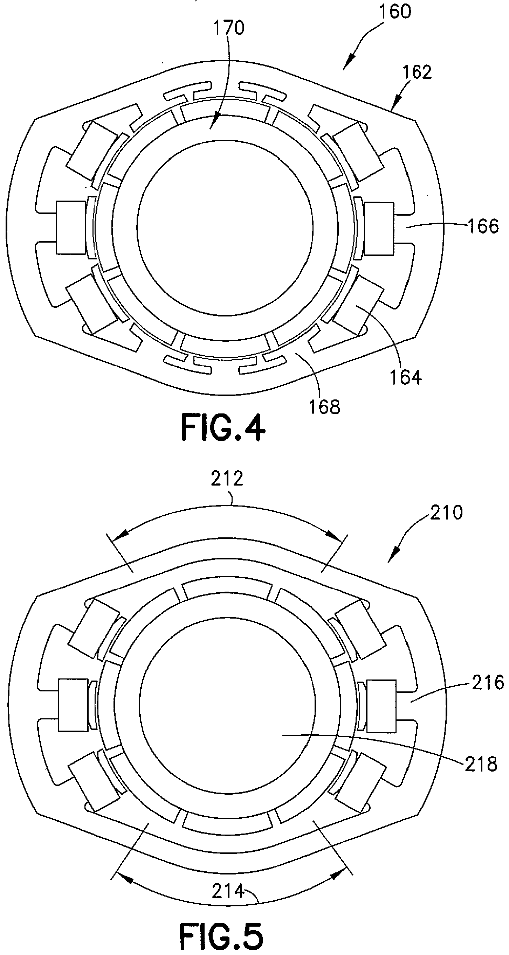

Referring now to Figure 4, there is shown a top representation of one example of motor assembly 160, useful for understanding the invention, having a stator 162 with windings 164 on a subset of the poles 166, 168. Here, in Figure 4, there is shown an oval stator 162 and rotor 170. Here, of the 12 stator teeth, windings are present in only 6 of the teeth. Alternately, more or less teeth and/or windings may be provided. Here, the example allows for a larger rotor and consequently larger ball screw, for example, in a Z motor. Alternately, similar examples are possible with shapes or otherwise with respect to the Figures and description here in. Here, the presence of teeth 168 with no coils may enable minimization of cogging torque by way of example. In the apparatus shown, at least one coil winding 164 may be located on a first set of teeth 166 and not located on a second set of teeth 168. In alternate aspects, more or less teeth with more or less windings may be provided. For example, a stator may be provided with no poles or windings along certain directions as shown in Figure 5.

Referring now to Figure 5, there is shown a top representation of one example of motor assembly 210 useful for understanding the invention. In Figure 5, there is shown a similar stator to that shown with respect to Figure 4 but with no teeth in certain stator sections 212, 214. The example may allow for a larger rotor and packaging of a larger ball screw by way of example. Further, the example may be applicable to other shapes, for example, with respect to the figures and description here in. In the apparatus 210 of Figure 5, the teeth 216 may extend radially inward towards the rotor receiving area 218 where the teeth 216 may not be located on two opposite sides 212, 214 of the rotor receiving area 218 along arcs, for example, of about 40-100 degrees or other suitable angles or ranges of angles.

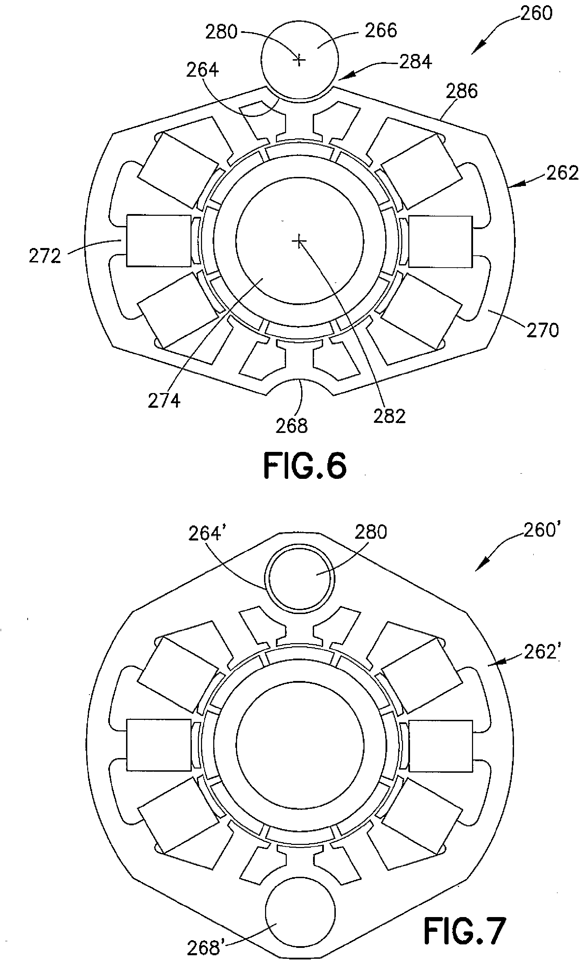

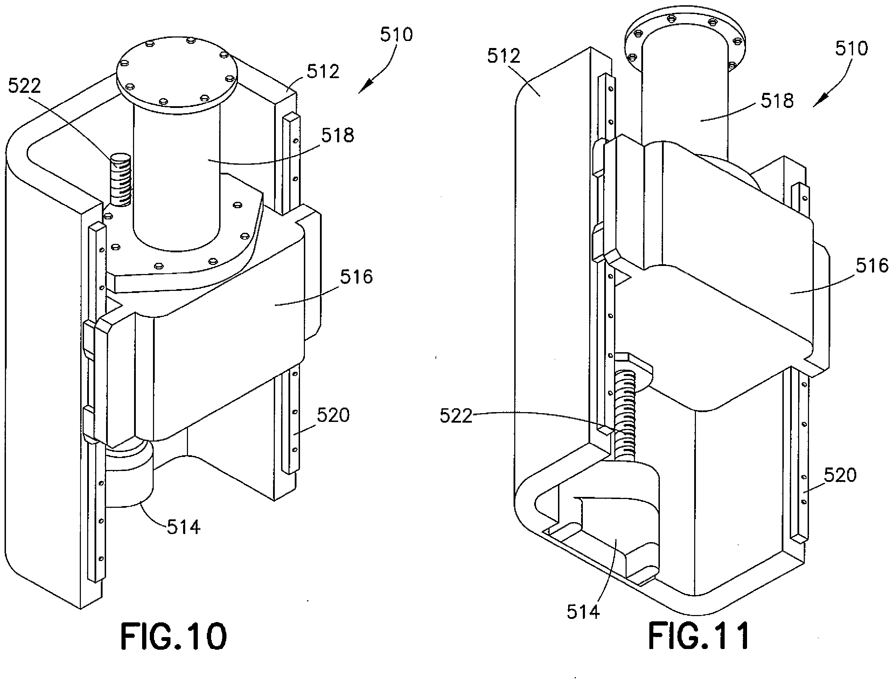

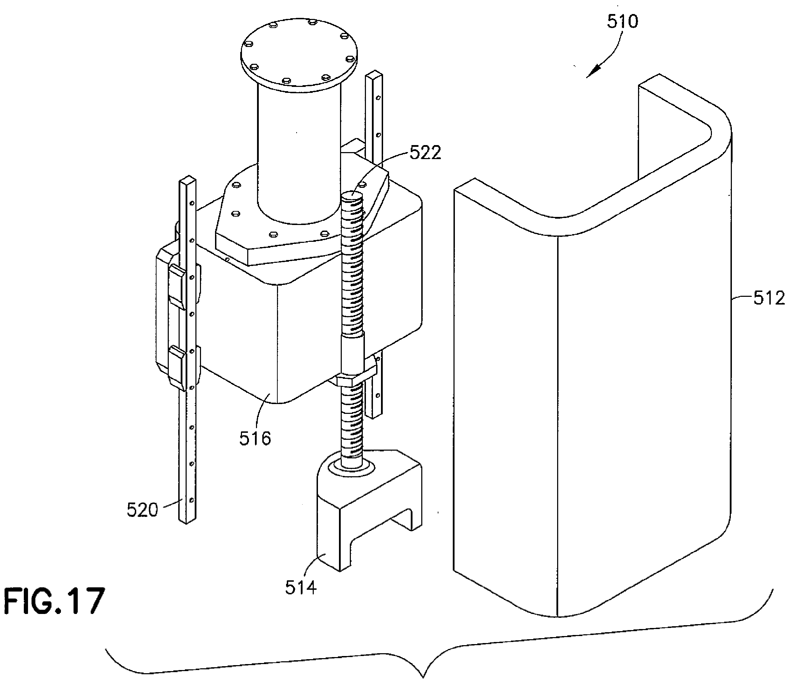

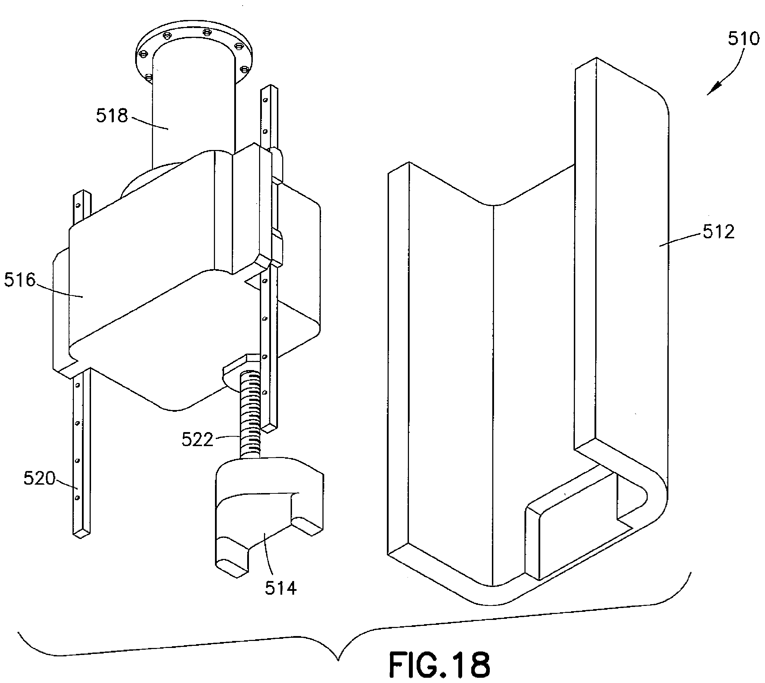

Referring now to Figure 6, there is shown a top representation of one embodiment belonging to the invention of motor assembly 260. Motor 260 has stator 262 with a cutout 264 for alternate packaging of other components 266, for example, a Z motor ball screw or otherwise. Cutout 268 is provided further for symmetry. In Figure 6, a variation of Fig. 4 is shown with opposite sides of the stator recessed 264, 266 to allow packaging of other assembly components - such as ball screw of a Z motor in a robot assembly. In the apparatus, the stator 262 comprises a stator member 270 forming teeth 272, where the stator member may comprise at least one component receiving area 264 spaced from the rotor receiving area 274. The at least one component receiving area 264 may be sized and shaped to have a component 266 movably located therein. Here, the at least one component receiving area 264 may have a center axis 280 which is parallel to a center axis 282 of the rotor receiving area 274. The at least one component receiving area 264 may have an open side 284 at a lateral side perimeter wall 286 of the stator member 262. Referring to Figure 7, there is shown a top representation of an example of motor assembly 260' useful for understanding the invention. Here, stator 262' is shown with a hole 264' to facilitate packaging, for example, to allow a Z motor ball screw 280. In the example shown in Figure 7, a stator housing 262' has a hole 264' to allow for a ball screw 280 from another motor, such as a Z motor, to pass through. Here, at least one component 280 may be movably located in the at least one component receiving area 264 where the at least one component 280 may be a rod having a screw thread located in the at least one component receiving area 264. The rod may be configured to rotate in the at least one component receiving area. The at least one component receiving area may be configured for the stator to longitudinally move up and down along the rod. As shown with respect to Figures 10-18, the apparatus may further comprise a motor housing having the stator therein. The stator housing may be connected to the screw thread of the rod such that rotation of the rod causes the motor housing to longitudinally move along the rod.

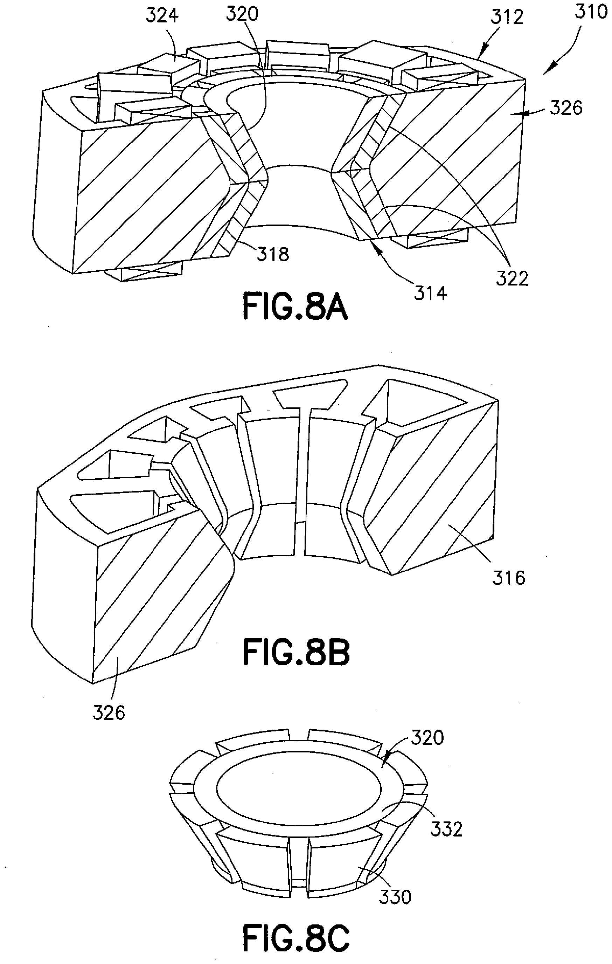

Referring now to Figure 8A, there is shown an isometric section representation of one example of motor assembly 310, useful for understanding the invention, having stator 312 and rotor 314 where rotor 314 has first portion 318 and second portion 320. Here, a non-circular stator with non-cylindrical air gap is shown by way of example. Referring also to Figure 8B, there is shown an isometric section representation of stator core 316 of the motor assembly of Figure 8A. Referring also to Figure 8C, there is shown an isometric section representation of a rotor portion 320 of the motor assembly of Figure 8A. Figures 8A -8C show a rotor stator set with a non-cylindrical air gap 322, for example, to increase overall flux flow through the coils 324. Here, the stator 312 has convex stator teeth 326 and the rotor 314 has concave rotor magnets 330 and yoke 332. Further, the rotor may be made of two halves 318, 320 to facilitate assembly. The disclosed may further be applied to the figures above alternately. Here, a gap 322 may be provided between the stator 312 and the rotor 314 at the rotor receiving area, where the gap 322 has a shape which is not uniformly cylindrical. Here, the rotor 314 may comprise a first top side member 320 and a second bottom side member 318 which have substantial cone shapes orientated in opposite directions. In alternate aspects, other shapes may be used.

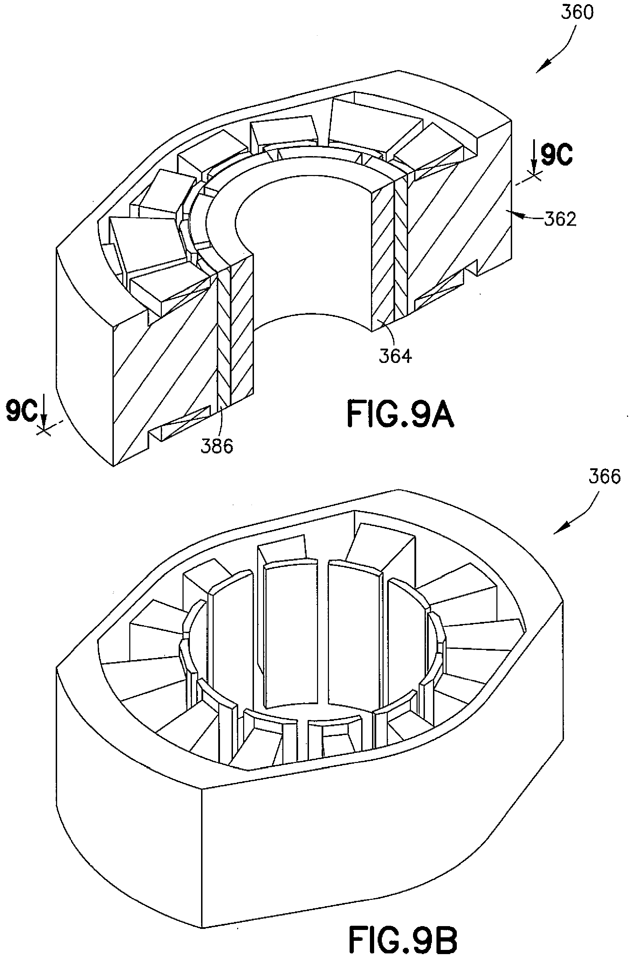

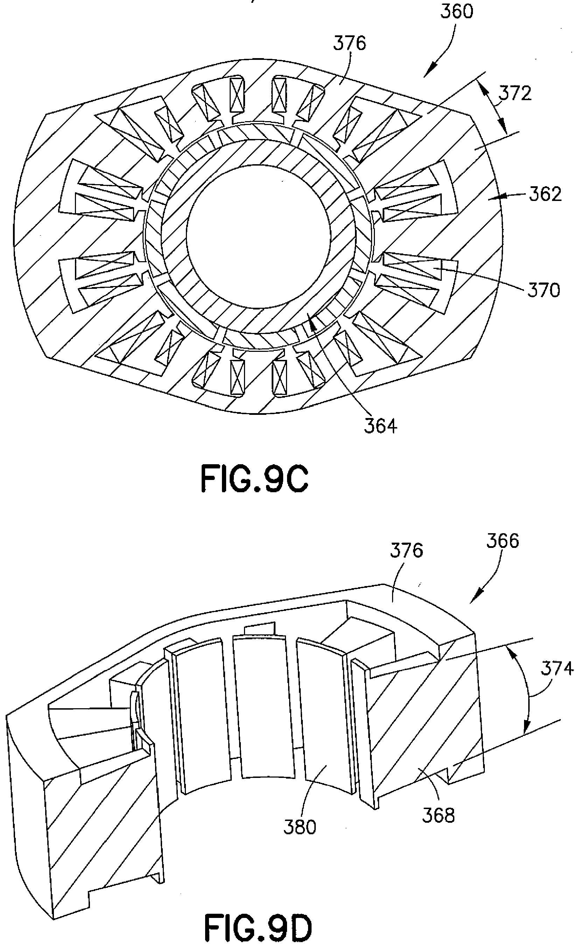

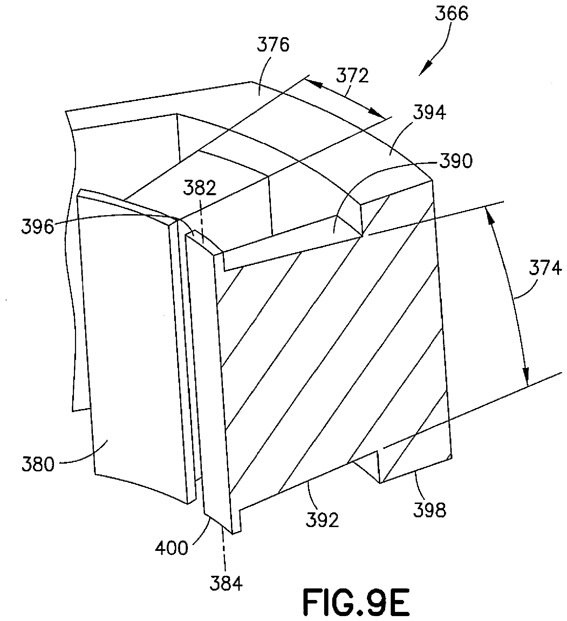

Referring now to Figures 9A - 9E, there is shown an exemplary non-circular stator with features to facilitate 3-dimensional flux flow. Referring now to Figure 9A, there is shown an isometric section representation of one example of motor assembly 360, useful for understanding the invention, having stator 362 and rotor 364. Referring also to Figure 9B, there is shown an isometric representation of stator core 366 of the motor assembly 360 of Figure 9A. Referring also to Figure 9C, there is shown a section representation of the motor assembly 360 of Figure 9A. Referring also to Figure 9D, there is shown an isometric section representation of stator core 366 of the motor assembly of Figure 9A. Referring also to Figure 9E, there is shown a partial isometric section representation of stator core 366 of the motor assembly of Figure 9A. In Figures 9A - 9E, there are shown stator teeth 368 and coils 370 tapered in two dimensions 372, 374. This provides space for more winding turns. Here, the stator outer wall 376 may be selectively extended in the axial direction to provide more area for flux to flow through. Further, the stator shoe 380, at the inner diameter, may also be extended axially 382, 384 to allow for more area for flux to flow through. Here, the geometry allows the use of longer magnets 386 to increase flux flow. The features may be used together or in any combination. The disclosed may further be applied to the figures above alternately. For example, in the apparatus, at least some of the teeth may taper in two orthogonal directions as shown or otherwise. Here, The stator may comprise a stator member 366 forming the teeth 368, an outer perimeter wall 376 at outer ends of the teeth and respective shoes 380 at inner ends of the teeth. Top 390 and bottom 392 sides of the teeth may be recessed relative to top 394, 396 and bottom 398, 400 sides of the outer perimeter and the shoes respectively. In the apparatus, the stator member may be a one-piece member or alternately, multi piece members.

For the disclosed, the stator material may be anisotropic, such as laminated steel or isotropic such as soft magnetic composites. Further, the stator may double up as the motor housing. For example, the stator may have mounting features machined on it and can mount directly to the machinery or driven components. In alternate aspects, any suitable shaped oval may be provided with any suitable tooth/magnet combination, for example, 6-tooth configuration, 12-tooth configuration, 24-tooth configuration or otherwise. Similarly, a general oval-shape stator with depopulated coils may be provided. Similarly, a generally oval-shaped stator with concave shape, e.g., to fit ball-screw or with a through-hole, e.g., to fit ball-screw may be provided. Similarly, a generally oval-shaped motor with laminated stator or with composite stator may be provided. Similarly, a general oval-shaped motor with 3D flux features, e.g., recessed coils, or a general oval-shaped motor with hybrid-field features, for example, conical topology may be provided. Similarly any suitable generally oval-shaped stator integrated with motor housing may be provided. As shown below, the use of an oval motor in a robot may be provided, for example, in a Z-axis embodiment, theta-axis embodiment or otherwise.

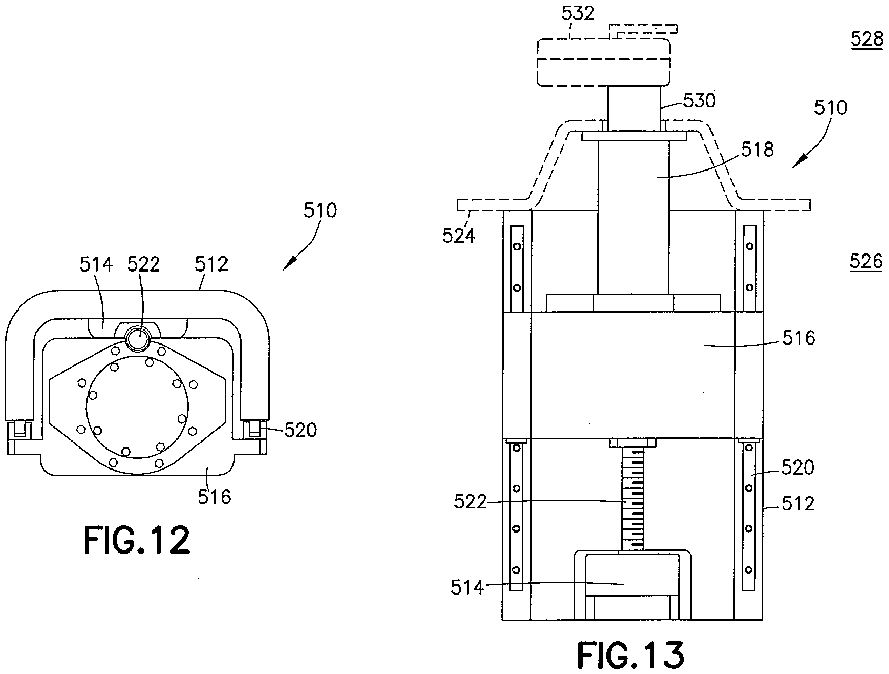

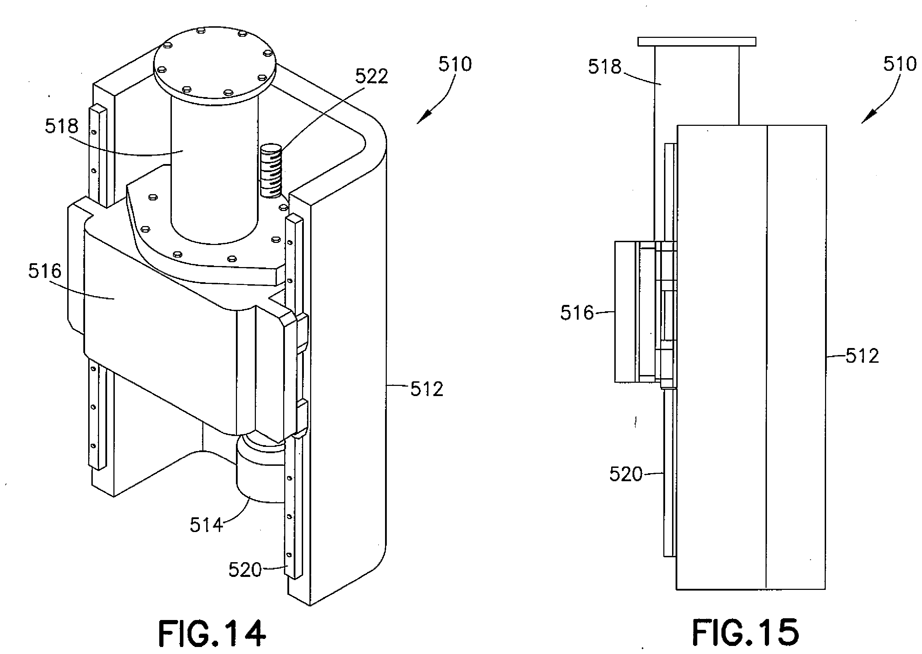

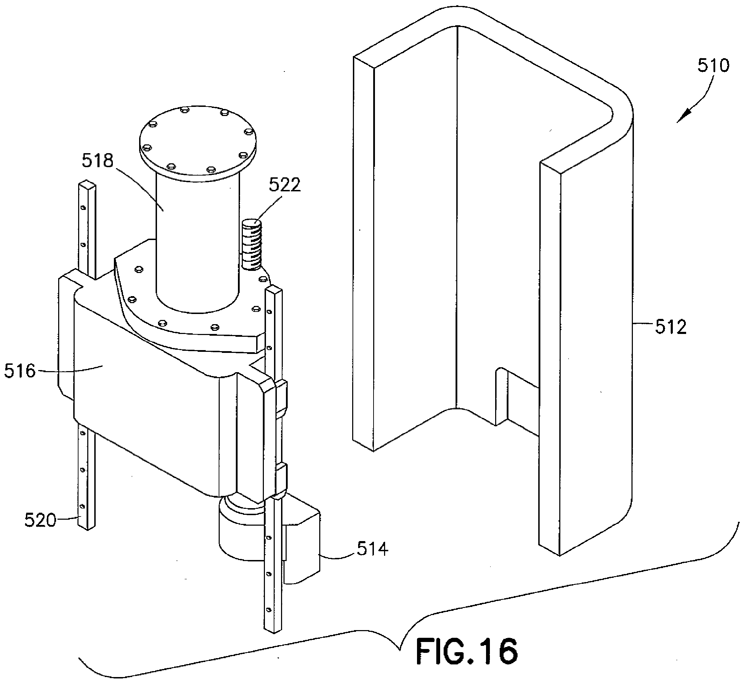

Referring now to Figures 10-11, there are shown isometric representations of robot drive 510. Referring also to Figure 12, there is shown a bottom representation of robot drive 510. Referring also to Figure 13, there is shown a side representation of robot drive 510. Referring also to Figure 14, there is shown an isometric representation of robot drive 510. Referring also to Figure 15, there is shown a side representation of robot drive 510. Referring also to Figures 16-18, there are shown exploded isometric representations of robot drive 510. Robot 510 may have features as disclosed in United States Patent No. 8,716,909 having an issue date of May 6, 2015 and entitled "Robot with Heat Dissipating Stator" Robot 510 has housing 512 with a Z motor assembly and housing 514 coupled at a lower portion of housing 512. Z motor assembly and housing 514 may incorporate features of the generally oval-shaped stator and motor assemblies disclosed here in. T motor assembly and housing 516 is vertically moveable within housing 512 and may be coupled to bellows 518 and further coupled to housing 512 via slides 520 which constrain T motor assembly and housing 516 to move in a vertical direction. Screw 522 is coupled to and rotated by Z motor assembly and housing 514 and has a nut coupled to T motor assembly and housing 516 which is driven and vertically moveable within housing 512 by virtue of rotation of screw 522 rotated by a rotor of Z motor assembly and housing 514. T motor assembly and housing 516 may incorporate rotor and stator sets as any of the disclosed embodiment, for example, T motor assembly and housing 516 may incorporate one or more stacked rotor and stator sets as shown in Figure 6 where leadscrew 522 may be packaged closer to the center of rotation of T motor assembly and housing 516 as compared to an arrangement with a circular stator. Referring to Figure 13, the apparatus may further comprise one or more drive shaft(s) 530 extending from one or more rotor(s) of T motor assembly and housing 516 and a robot arm 532 connected to the drive shaft. Here, mounting flange 524 may be coupled to housing 512 and bellows 518 separating atmosphere 526 from vacuum 528 where output shaft (s) 530 and arm 532 are in the vacuum environment. Here, Figures 10-18 show a robot drive 510 to illustrate the embodiment of the generally oval-shaped motors. Here, generally oval-shaped motors may be used in any suitable axis to allow for the efficient packaging of additional or complimentary components. For example, the robot may use the generally oval-shaped or "football" shaped Z-axis motor and a round or rectangular T-axis motor with a hole though it or a semi-circular cut through it to create a smaller distance from the center of the T-axis motor to the ball-screw. Here, one or more generally oval-shaped motors may be provided in a robot to optimize packaging such that the motors can be packaged to utilize space efficiently, for example, ball screw going through the T-motor, reduced distance of the ball-screw axis to the frame due to the shape of the Z-motor or otherwise.

It should be understood that the foregoing description is only illustrative. Various alternatives and modifications can be devised by those skilled in the art. Accordingly, the description is intended to embrace all alternatives, modifications and variances which fall within the scope of the appended claims.

## Claims

1. An apparatus comprising:
a motor (260) comprising:
a rotor (22); and
a stator (262), where the rotor is located at least partially in a rotor receiving area (274) of the stator, where the stator comprises at least one coil winding (16) and a plurality of teeth (272, 18, 20), where the at least one coil winding is located on at least some of the teeth, where the teeth comprise a first set of the teeth and a second set of the teeth, where the teeth (20) of the first set of teeth are longer in a radial direction from the rotor receiving area than the teeth (18) of the second set of teeth, where the stator comprises a stator member forming the plurality of teeth, where a base (32) of each of the teeth is located at a portion of the stator member which forms an outer perimeter wall (270) of the stator member, where slots are provided in the stator member between the teeth, and where the outer perimeter wall has a general oval shaped axial cross-section, where the outer perimeter wall comprises:
a length between two first opposite outer sides;
a width between two second opposite outer sides;
wherein the length is longer than the width;
wherein the second opposite outer sides each consist of two generally flat exterior surfaces connected by a middle curved exterior surface (284), and wherein the middle curved exterior surface curves inwards towards the rotor receiving area;
wherein the generally flat exterior surfaces on each of the second opposite sides are angled relative to each other; and
wherein a length of the first opposite outer sides is smaller than a length of the second opposite outer sides.

2. An apparatus as in claim 1 where the stator member comprises at least two component receiving areas (264,268) spaced from the rotor receiving area, where a first one (264) of the at least two component receiving areas is sized and shaped to have a component movably located therein, and where a second one (268) of the at least two component receiving areas is a symmetry cutout which is symmetrically arranged in the stator member relative to the first component receiving area.

3. An apparatus as in claim 2 where the at least two component receiving areas each have a center axis (280) which is parallel to a center axis (282) of the rotor receiving area.

4. An apparatus as in claim 3 where the at least two component receiving areas each have an open side at a lateral side of the outer perimeter wall of the stator member.

5. An apparatus as in any one of claims 1-4 where the teeth extend radially inward towards the rotor receiving area, and where the teeth are not located on two opposite sides of the rotor receiving area along arcs of about 40-100 degrees.

6. An apparatus as in any one of claims 1-5 where the at least one coil winding is located on the first and second sets of teeth, and where:
the at least one coil winding comprises more winding turns on the first set of teeth than the second set of teeth and/or
the at least one coil winding comprises thicker wire on the first set of teeth than the second set of teeth.

7. An apparatus as in any one of claims 1-6 where a gap (322) is provided between the stator and the rotor at the rotor receiving area, where the gap has a shape which is not uniformly cylindrical; and
where the rotor comprises a first top side member and a second bottom side member which have substantial cone shapes orientated in opposite directions.

8. An apparatus as in any one of claims 1-7 where at least some of the teeth taper in two orthogonal directions.

9. An apparatus as in any one of claims 1-8 where the outer perimeter wall is at outer ends of the teeth and respective shoes are at inner ends of the teeth, where top and bottom sides of the teeth are recessed relative to top and bottom sides of the outer perimeter wall and the shoes; and preferably
where the stator member is a one-piece member.

10. An apparatus as in any one of claims 1-9 further comprising:
a drive shaft (530) extending from the rotor; and
a robot arm (532) connected to the drive shaft.

11. An apparatus as in claim 2 where the component comprises a rod having a screw thread located in the first component receiving area, where the rod is configured to rotate in the first component receiving area, where the first component receiving area is configured for the stator to longitudinally move up and down along the rod, and where the second component receiving area does not comprise a rod therein.

12. An apparatus as in claim 11 where the apparatus further comprises a motor housing having the stator therein, where the stator housing is connected to the screw thread of the rod such that rotation of the rod causes the motor housing to longitudinally move along the rod.

13. A method comprising:
forming a stator member having a plurality of teeth (272, 18, 20), where the stator (262) comprises a rotor receiving area (274), where the plurality of teeth comprise a first set of the teeth and a second set of the teeth, where the teeth (20) of the first set of teeth are longer in a radial direction from the rotor receiving area than the teeth (18) of the second set of teeth, where a base (32) of each of the plurality of teeth is located at a portion of the stator member which forms an outer perimeter wall (270) of the stator member, where slots are provided in the stator member between the teeth, and where the outer perimeter wall has a general oval shaped axial cross-section, where the outer perimeter wall comprises:
a length between two first opposite outer sides;
a width between two second opposite outer sides;
wherein the length is longer than the width;
wherein the second opposite outer sides each consist of two generally flat exterior surfaces connected by a middle curved exterior surface (284), and wherein the middle curved exterior surface curves inwards towards the rotor receiving area;
wherein the generally flat exterior surfaces on each of the second opposite sides are angled relative to each other; and
wherein a length of the first opposite outer sides is smaller than a length of the second opposite outer sides; and
locating at least one coil winding (16) on at least some of the plurality of teeth.

## Patentansprüche

1. Vorrichtung aufweisend:
einen Motor (260) aufweisend:
einen Rotor (22); und
einen Stator (262), wobei der Rotor zumindest teilweise in einem Rotor-Aufnahmebereich (274) des Stators angeordnet ist, wobei der Stator wenigstens eine Spulenwicklung (16) und eine Vielzahl von Zähnen (272, 18, 20) aufweist, wobei die wenigstens eine Spulenwicklung an wenigstens einigen der Zähne angeordnet ist, wobei die Zähne eine erste Gruppe von Zähnen und eine zweite Gruppe von Zähnen aufweisen, wobei die Zähne (20) der ersten Gruppe von Zähnen in einer radialen Richtung von dem Rotor-Aufnahmebereich länger sind als die Zähne (18) der zweiten Gruppe von Zähnen, wobei der Stator ein die Vielzahl der Zähne bildendes Statorelement aufweist, wobei eine Basis (32) eines jeden der Zähne an einem Teil des Statorelements angeordnet ist, der eine äußere Umfangswand (270) des Statorelements bildet, wobei Schlitze im Statorelement zwischen den Zähnen ausgebildet sind, und wobei die äußere Umfangswand einen allgemein ovalen axialen Querschnitt hat, wobei die äußere Umfangswand aufweist:
eine Länge zwischen zwei ersten einander gegenüberliegenden Außenseiten;
eine Breite zwischen zwei zweiten einander gegenüberliegenden Außenseiten;
wobei die Länge länger als die Breite ist;
wobei die zweiten einander gegenüberliegenden Außenseiten jeweils aus zwei allgemein flachen Außenflächen bestehen, die über eine mittlere gekrümmte Außenfläche (284) miteinander verbunden sind, und wobei die mittlere gekrümmte Außenfläche nach innen zum Rotor-Aufnahmebereich hin gekrümmt ist;
wobei die allgemein flachen Außenflächen an jeder der zweiten einander gegenüberliegenden Seiten zueinander abgewinkelt sind; und
wobei eine Länge der ersten einander gegenüberliegenden Außenseiten kleiner ist als eine Länge der zweiten einander gegenüberliegenden Außenseiten.

2. Vorrichtung wie in Anspruch 1, wobei das Statorelement wenigstens zwei von dem Rotor-Aufnahmebereich beabstandete Komponenten-Aufnahmebereiche (264, 268) aufweist, wobei ein erster (264) der wenigstens zwei Komponenten-Aufnahmebereiche so bemessen und geformt ist, dass darin eine Komponente beweglich angeordnet ist, und wobei eine zweite (268) der wenigstens zwei Komponenten-Aufnahmebereiche ein Symmetrieausschnitt ist, der relativ zum ersten Komponenten-Aufnahmebereich symmetrisch in dem Statorelement angeordnet ist.

3. Vorrichtung wie in Anspruch 2, wobei die wenigstens zwei Komponenten-Aufnahmebereiche jeweils eine Zentralachse (280) haben, die parallel zu einer Zentralachse (282) des Rotor-Aufnahmebereiches ist.

4. Vorrichtung wie in Anspruch 3, wobei die wenigstens zwei Komponenten-Aufnahmebereiche jeweils eine offene Seite an einer seitlichen Seite der äußeren Umfangswand hat.

5. Vorrichtung wie in einem der Ansprüche 1-4, wobei die Zähne nach radial innen zum Rotor-Aufnahmebereich verlaufen, und wobei die Zähne nicht an zwei gegenüberliegenden Seiten des Rotor-Aufnahmebereichs entlang von Bögen von etwa 40-100 Grad liegen.

6. Vorrichtung wie in einem der Ansprüche 1-5, wobei die wenigstens eine Spulenwicklung an den ersten und zweiten Gruppen von Zähnen angeordnet ist, und wobei:
die wenigstens eine Spulenwicklung mehr Windungsstränge auf der ersten Gruppe der Zähne als auf der zweiten Gruppe von Zähnen aufweist und/oder
die wenigstens eine Spulenwicklung dickeren Draht auf der ersten Gruppe von Zähnen als auf der zweiten Gruppe von Zähnen aufweist.

7. Vorrichtung wie in einem der Ansprüche 1-6, wobei am Rotor-Aufnahmebereich ein Spalt (322) zwischen dem Stator und dem Rotor ausgebildet ist, wobei der Spalt eine nicht gleichmäßig zylindrische Form hat, und
wobei der Rotor ein erstes oberes Seitenteil und ein zweites unteres Seitenteil aufweist, die im Wesentlichen konische Formen haben, die in entgegengesetzten Richtungen ausgerichtet sind.

8. Vorrichtung wie in einem der Ansprüche 1-7, wobei wenigstens einige der Zähne sich in zwei orthogonalen Richtungen verjüngen.

9. Vorrichtung wie in einem der Ansprüche 1-8, wobei die äußere Umfangswand sich an den äußeren Enden der Zähne befindet und entsprechende Schuhe an den inneren Enden der Zähne sind, wobei obere und untere Seiten der Zähne relativ zu den oberen und unteren Seiten der äußeren Umfangswand und den Schuhen vertieft sind; und vorzugsweise wobei das Statorelement ein einteiliges Element ist.

10. Vorrichtung wie in einem der Ansprüche 1-9 ferner aufweisend:
eine sich von dem Rotor weg erstreckende Antriebswelle (530); und
einen mit der Antriebswelle verbundenen Roboterarm (532).

11. Vorrichtung wie in Anspruch 2, wobei die Komponente eine Stange mit einem Schraubgewinde, das sich im ersten Komponenten-Aufnahmebereich befindet, aufweist, wobei die Stange konfiguriert ist, um im ersten Komponenten-Aufnahmebereich zu rotieren, wobei der erste Komponenten-Aufnahmebereich so konfiguriert ist, dass sich der Stator in Längsrichtung entlang der Stange auf und ab bewegt, und wobei der zweite Komponenten-Aufnahmebereich keine Stange darin aufweist.

12. Vorrichtung wie in Anspruch 11, wobei die Vorrichtung ferner einen Motorgehäuse aufweist, in dem sich der Stator befindet, wobei das Statorgehäuse mit dem Schraubgewinde der Stange verbunden ist, derart, dass die Rotation der Stange bewirkt, dass sich das Motorgehäuse in Längsrichtung entlang der Stange bewegt.

13. Verfahren aufweisend:
Ausbilden eines Statorelements mit einer Vielzahl von Zähnen (272, 18, 20), wobei der Stator (262) einen Rotor-Aufnahmebereich (274) aufweist, wobei die Vielzahl von Zähnen eine erste Gruppe von Zähnen und eine zweite Gruppe von Zähnen aufweist, wobei die Zähne (20) der ersten Gruppe von Zähnen in einer radialen Richtung vom Rotor-Aufnahmebereich länger sind als die Zähne (18) der zweiten Gruppe von Zähnen, wobei eine Basis (32) eines jeden der Zähne an einem Teil des Statorelements angeordnet ist, der eine äußere Umfangswand (270) des Statorelements bildet, wobei Schlitze im Statorelement zwischen den Zähnen ausgebildet sind, und wobei die äußere Umfangswand einen allgemein ovalen axialen Querschnitt hat, wobei die äußere Umfangswand aufweist:
eine Länge zwischen zwei ersten einander gegenüberliegenden Außenseiten;
eine Breite zwischen zwei zweiten einander gegenüberliegenden Außenseiten;
wobei die Länge länger als die Breite ist;
wobei die zweiten einander gegenüberliegenden Außenseiten jeweils aus zwei allgemein flachen Außenflächen bestehen, die über eine mittlere gekrümmte Außenfläche (284) miteinander verbunden sind, und wobei die mittlere gekrümmte Außenfläche nach innen zum Rotor-Aufnahmebereich hin gekrümmt ist;
wobei die allgemein flachen Außenflächen an jeder der zweiten einander gegenüberliegenden Seiten zueinander abgewinkelt sind; und
wobei eine Länge der ersten einander gegenüberliegenden Außenseiten kleiner ist als eine Länge der zweiten einander gegenüberliegenden Außenseiten; und
Anordnen mindestens einer Spulenwicklung auf mindestens einigen der Vielzahl von Zähnen.

## Revendications

1. Appareil comprenant :
un moteur (260) comprenant :
un rotor (22) ; et
un stator (262), dans lequel le rotor est situé au moins partiellement dans une zone de réception de rotor (274) du stator, dans lequel le stator comprend au moins une bobine d'enroulement (16) et une pluralité de dents (272, 18, 20),
dans lequel se trouve ladite au moins une bobine d'enroulement sur au moins certaines des dents, dans lequel les dents comprennent un premier ensemble de dents et un deuxième ensemble de dents,
dans lequel les dents (20) du premier ensemble de dents sont plus longues dans une direction radiale de la zone de réception du rotor que les dents (18) du deuxième ensemble de dents,
dans lequel le stator comprend un élément de stator formant la pluralité de dents, dans lequel une base (32) de chacune des dents est située dans une partie de l'élément de stator qui forme une paroi externe de périmètre (270) de l'élément de stator, dans lequel les emplacements sont prévus dans l'élément de stator entre les dents et dans lequel la paroi extérieure de périmètre a une section transversale axiale de forme générale ovale,
dans lequel la paroi extérieure de périmètre comprend :
une longueur entre deux premiers côtés extérieurs opposés ;
une largeur entre deux deuxièmes côtés extérieurs opposés ;
dans lequel la longueur est plus longue que la largeur ;
dans lequel les deuxièmes côtés extérieurs opposés se composent de deux surfaces extérieures généralement plates reliées par une surface extérieure incurvée intermédiaire (284), et dans laquelle la surface extérieure incurvée intermédiaire se courbe vers l'intérieur vers la zone de réception du rotor ;
dans lequel les surfaces extérieures généralement plates sur chacun des deux côtés opposés sont inclinées les unes par rapport aux autres ; et
dans lequel une longueur des premiers côtés extérieurs opposés est inférieure à une longueur des deuxièmes côtés extérieurs opposés.

2. Appareil selon la revendication 1, dans lequel l'élément de stator comprend au moins deux zones de réception de composants (264, 268) espacées de la zone de réception du rotor, dans lequel une première (264) zone parmi lesdites au moins deux zones de réception de composants est dimensionnée et façonnée pour avoir un composant situé pour être mobile dans celui-ci, et dans lequel une deuxième zone (268) pour lesdites au moins deux zones de réception de composants est une découpe de symétrie qui est agencée symétriquement dans l'élément de stator par rapport à la première zone de réception du composant.

3. Appareil selon la revendication 2, dans lequel lesdites au moins deux zones de réception de composants ont chacune un axe central (280) qui est parallèle à un axe central (282) de la zone de réception du rotor.

4. Appareil selon la revendication 3, dans lequel lesdites au moins deux zones de réception de composants ont chacune un côté ouvert au niveau d'un côté latéral de la paroi extérieure de périmètre de l'élément de stator.

5. Appareil selon l'une quelconque des revendications 1 à 4, dans lequel les dents s'étendent radialement vers l'intérieur vers la zone de réception du rotor et dans lequel les dents ne sont pas situées sur deux côtés opposés de la zone de réception du rotor le long des arcs d'environ 40-100 degrés.

6. Appareil selon l'une quelconque des revendications 1 à 5, dans lequel se trouve ladite au moins une bobine d'enroulement sur les premier et deuxième ensembles de dents, et dans lequel :
ladite au moins une bobine d'enroulement comprend plus de tours d'enroulement sur le premier ensemble de dents que sur le deuxième ensemble de dents et / ou que lesdites au moins une bobine d'enroulement comprennent un fil plus épais sur le premier ensemble de dents que sur le deuxième ensemble de dents.

7. Appareil selon l'une quelconque des revendications 1 à 6, dans lequel un espace (322) est prévu entre le stator et le rotor au niveau de la zone de réception du rotor, dans lequel l'espace a une forme qui n'est pas uniformément cylindrique ; et
dans lequel le rotor comprend un premier élément latéral supérieur et un deuxième élément latéral inférieur qui présentent des formes de cône substantielles orientées dans des directions opposées.

8. Appareil selon l'une quelconque des revendications 1 à 7, dans lequel au moins certaines des dents vont en diminuant dans deux directions orthogonales.

9. Appareil selon l'une quelconque des revendications 1 à 8, dans lequel la paroi extérieure de périmètre est au niveau des extrémités extérieures des dents et des chaussures respectives sont au niveau des extrémités intérieur des dents, dans lequel les côtés supérieurs et inférieurs des dents sont encastrés par rapport aux côtés supérieurs et inférieurs de la paroi de périmètre extérieur et des chaussures ; et de préférence
dans lequel l'élément de stator est un élément d'une seule pièce.

10. Appareil selon l'une quelconque des revendications 1 à 9, comprenant en outre :
un arbre d'entraînement (530) s'étendant depuis le rotor ; et
un bras robot (532) connecté à l'arbre d'entraînement.

11. Appareil selon la revendication 2, dans lequel le composant comprend une tige ayant un filetage à vis situé dans la première zone de réception du composant, dans lequel la tige est configurée pour tourner dans la première zone de réception du composant, dans lequel la première zone de réception du composant est configurée pour que le stator monte longitudinalement et descende le long de la tige et dans lequel la zone de réception du deuxième composant ne comprend pas de tige à l'intérieur.

12. Appareil selon la revendication 11, dans lequel l'appareil comprend en outre un boîtier moteur ayant le stator à l'intérieur, dans lequel le boîtier du stator est relié au filetage à vis de la tige de telle sorte que la rotation de la tige provoque le mouvement du moteur pour se déplacer longitudinalement le long de la tige.

13. Procédé comprenant les étapes consistant à :
former un élément de stator ayant une pluralité de dents (272, 18, 20), dans lequel le stator (262) comprend une zone de réception de rotor (274), dans lequel la pluralité de dents comprend un premier ensemble de dents et un deuxième ensemble de dents, dans lequel les dents (20) du premier ensemble de dents sont plus longues dans une direction radiale à partir de la zone de réception du rotor que les dents (18) du deuxième ensemble de dents, dans lequel une base (32) de chaque dent de la pluralité de dents est située au niveau d'une partie de l'élément de stator qui forme une paroi de périmètre extérieur (270) de l'élément de stator, dans lequel des fentes sont prévues dans l'élément de stator entre les dents et dans lequel la paroi extérieure de périmètre a une section transversale axiale de forme générale ovale, dans lequel la paroi extérieure de périmètre comprend :
une longueur entre deux premiers côtés extérieurs opposés ;
une largeur entre deux deuxièmes côtés extérieurs opposés ;
dans lequel la longueur est plus longue que la largeur ;
dans lequel les deuxièmes côtés extérieurs opposés se composent chacun de deux surfaces extérieures généralement plates reliées par une surface extérieure incurvée intermédiaire (284), et dans laquelle la surface extérieure incurvée intermédiaire se courbe vers l'intérieur vers la zone de réception du rotor ;
dans lequel les surfaces extérieures généralement plates sur chacun des deux côtés opposés sont inclinées les unes par rapport aux autres ; et
dans lequel une longueur des premiers côtés extérieurs opposés est inférieure à une longueur des deuxièmes côtés extérieurs opposés ; et
positionner au moins une bobine d'enroulement (16) sur au moins une partie de la pluralité de dents.
